# EUROPEAN PATENT APPLICATION

(11) **EP 1 264 643 A1**
(43) Date of publication of application: **11.12.2002**
(21) Application number: 02012352.7
(22) Date of filing: 05.06.2002
(51) Int. Cl.: B09B 3/00, C22B 7/00, C22B 7/02, C21B 3/04

(54) **Heat treatment method for treating waste**

(30) Priority: 06.06.2001 JP 2001171580
(71) Applicant: Kabushiki Kaisha Kobe Seiko Sho (Kobe Steel, Ltd.), Kobe-shi, Hyogo 651-8585 (JP)
(72) Inventor: Shimizu, Masahiro, Osaka Branch, Kobe Steel, Ltd., Osaka-shi, Osaka 541-0051 (JP); Sugitatsu, Hiroshi, Osaka Branch, Kobe Steel, Ltd., Osaka-shi, Osaka 541-0051 (JP)
(74) Representative: Müller-Boré & Partner Patentanwälte

(57) **Abstract**

The method uses a mobile waste heat treatment furnace to treat wastes generated in geographically separated two or more places, with the treatment being carried out in these places where the wastes are generated. Alternatively, the mobile waste heat treatment furnace is used to treat the wastes after these wastes have been moved to a properly built station. An improved heat treatment method for treating a waste is provided. The method permits heat treatment to be carried out in a relatively small scale, and can effectively treat wastes discharged from various types of plants.

## Description

The present invention relates to a useful method capable of easily treating an iron-containing waste in working site in each plant in order to convert the waste into harmless substance. This method may be carried out by at first assembling in each plant a waste treatment equipment including a heat treatment furnace for treating a mobile waste, and then making connections among various utilities, so that it is possible to carry out a heat treatment as well as a reduction treatment for treating an iron-containing waste (dust), thereby removing some volatile metal components such as zinc and lead, recovering with a high purity the waste in the form of various oxides, or recovering the waste in the form of a high purity metal iron free from reduced iron and slag. However, although the waste to be treated in the present invention includes various types of materials discharged from various types of plants, the word "waste" in the present specification is used to mainly represent an iron-containing waste (dust) discharged from an iron and steel plant as well as from an automobile crushing plant.

A large amount of iron-containing waste is usually discharged from an iron and steel plant as well as from an automobile crushing plant. The discharged waste is then subjected to a heat treatment so as to remove some volatile metal components such as zinc and lead, while at the same time recovering a metal iron with a high purity. As an equipment for use in such a heat treatment, there has been known a rotary kiln called Waelz kiln. However, such an equipment has long been associated with a series of problems, such as a high cost in running the equipment, and a low zinc recovery ratio when treating a raw material (waste) having a low zinc concentration. Another problem associated with the above-described conventional equipment is that such an equipment fails to provide a sufficient poison removal effect. As a result, some poisonous components such as cadmium, chromium and halogen are still remaining in a large amount in the waste. If such a heat treated waste is buried somewhere, it is very likely that these poisonous components will flow out.

As a heat treatment equipment for treating a waste, there has been developed a coke-filled melting/reducing furnace (for example, Japanese Unexamined Patent Application Publication No. 5-331515). However, this conventional equipment has suffered not only from a high equipment cost, but also from a large amount of unburned carbon monoxide contained in an exhaust gas. As a result, if there is not an equipment for making use of the exhaust gas in the vicinity of the melting/reducing furnace, there will be a problem that it is impossible to recover a useful energy. Moreover, another problem is that since the unit requirement of the coke is relatively high, a cost for running the equipment for treating the waste will also be high.

In addition, another technique for waste heat treatment is, for example, a method disclosed in the United States Patent No. 3443931. According to this disclosed method, carbon material is mixed with iron oxide powder to form a plurality of blocks. These blocks are then introduced into a rotary hearth so as to be heated and thus chemically reduced in a high temperature atmosphere, thereby producing an amount of reduced iron. The reduced iron produced in this method is subsequently introduced into an electric furnace without receiving any sort of treatment. Alternatively, the reduced iron is introduced into the electric furnace after being processed into briquettes. In this way, the reduced iron can be used as an iron source.

In recent years, with an increasingly active recycle of iron scraps, the reduced iron obtained in the above-described method has been considered to be an important dilution material for diluting some impurities which will be mixed into the scraps. In fact, this method is suitable for treating a waste containing iron and zinc, exhibiting an effect that it can effectively recover zinc.

On the other hand, for example, the United States Patent No. 6036744 and Japanese Unexamined Patent Application Publication No. 9-256017, as well as Japanese Unexamined Patent Application Publication No. 2000-144224 have disclosed other processes different from those described above, requiring that carbon material is mixed with iron oxide powder to form a plurality of blocks. These blocks are then introduced into a rotary hearth so as to be heated and thus chemically reduced in a high temperature atmosphere. Then, melting and separating operations are carried out to separate slags from iron materials by making use of a difference between their specific gravities, thereby producing an amount of metal iron having a high purity.

However, each of the above-described heat treatment methods or processes for treating an iron-containing waste requires using a fixed and large scale equipment. On the other hand, even if it is allowed to use a small scale equipment, such a small scale equipment has only limited functions because of its specific structure. In particular, as to some countries where iron-containing waste (dust) is not allowed to be freely moved across a boundary line according to their particular legal regulations, and as to some iron making plants (such as blast furnace and electric furnace) existing in some local areas, each iron making plant is required to have a waste treatment plant newly built. However, in the case where a waste treatment amount is relatively small, building a new waste treatment plant can not ensure that it will be put into full use, thus proving that it is not economical.

The present invention has been accomplished in view of the above-described situation, and it is an object of the invention to provide an improved heat treatment method for treating a waste, which method permits heat treatment to be carried out in a relatively small scale, and can effectively treat wastes discharged from various types of plants.

A method according to the present invention which has been proved to be able to achieve the above object, is a mobile waste treatment method for wastes containing metal or metal oxide comprising: providing a mobile heat treatment furnace for wastes containing metal or metal oxide; moving said mobile heat treatment furnace to a first place; conducting a heat treatment at said first place, wherein harmful substances contained in said wastes are removed from said wastes and harmless wastes are obtained; and moving said mobile heat treatment furnace to a second place after finishing said heat treatment at said first place, for conducting said heat treatment at said second place. In using the method of the present invention, other equipment such as dust collector and chimney, which are all provided associated with the heat treatment furnace, may be moved together with the heat treatment furnace, or may be fixed in advance in each treatment working site.

With the use of the method according to the present invention, it is allowed to use a mobile waste heat treatment furnace to transport valuable substance, volume reduced substance and harmless substance, all obtained during heat treatment, from the places where wastes are generated.

In carrying out the method of the present invention, it is preferable to use at least one parameter selected from the group consisting of generation amount, generation frequency and composition of the wastes generated in at least two geographically separated places, so as to determine (1) a movement order for the mobile waste heat treatment furnace, (2) an operation condition (for example, raw material mixing ratio, an atmosphere within the furnace, a temperature within the furnace) for the mobile waste heat treatment equipment, thereby effectively carrying out the present invention. Further, as to information processing at this time, it is possible to perform a communication to transmit the above parameters between waste generating places and the mobile waste heat treatment furnace.

The waste to be treated in the method of the present invention is typically an iron-containing waste (dust) discharged from iron making plant, including (1) a waste containing iron or iron oxide and (2) a waste containing zinc.

The present invention having the above-described structure, makes it possible to reduce the scale of an equipment for heat treatment, ensuring an efficient treatment of the wastes discharged from various plants, thus enabling the iron making industry as well as the waste treatment industry to treat wastes at a low cost. Further, the waste treated in the above-described method allows a raw material for iron making, a zinc-containing dust, a lead-containing dust, and separated slags to be recycled in each plant. Moreover, since all the wastes can be converted into harmless substances through a high temperature treatment, they are allowed to be transported across a boundary line.

Fig. 1 is an explanatory view schematically showing a concept of the method according to the present invention.

Fig. 2 is an explanatory view schematically showing an example of an embodiment of the present invention.

Fig. 3 is an explanatory view schematically showing an example representing a mobile heat treatment furnace used in the present invention.

Fig. 4 is a plan view schematically showing an example representing the mobile heat treatment furnace used in the present invention.

Fig. 5 is an external appearance view showing an example representing the mobile heat treatment furnace used in the present invention.

The inventors of the present invention have conducted their research in various aspects, for the purpose of establishing some optimum operation conditions for effectively treating wastes discharged from various different types of plants geographically separated from one another. In the end, the invention was accomplished on the base of the following ideas which the inventors have reached as a result of their research. Namely, the inventors have found that if they use equipments containing mobile waste heat treatment furnaces, and if such equipments are established in respective plants and connected to various existing utilities so as to perform the heat treatment of the iron-containing wastes, it will be possible to effectively remove some volatile metal components such as zinc and lead contained in the iron-containing wastes, thereby making it possible to recover these metal components in the form of their oxides with a high purity. Alternatively, if the heat treatment and the reduction treatment are conducted at the same time, it is possible to recover reduced iron or high purity metal iron from which slag has been separated. In this way, it becomes possible to easily conduct poison removal treatment of the iron-containing waste (dust) in the working site of each plant.

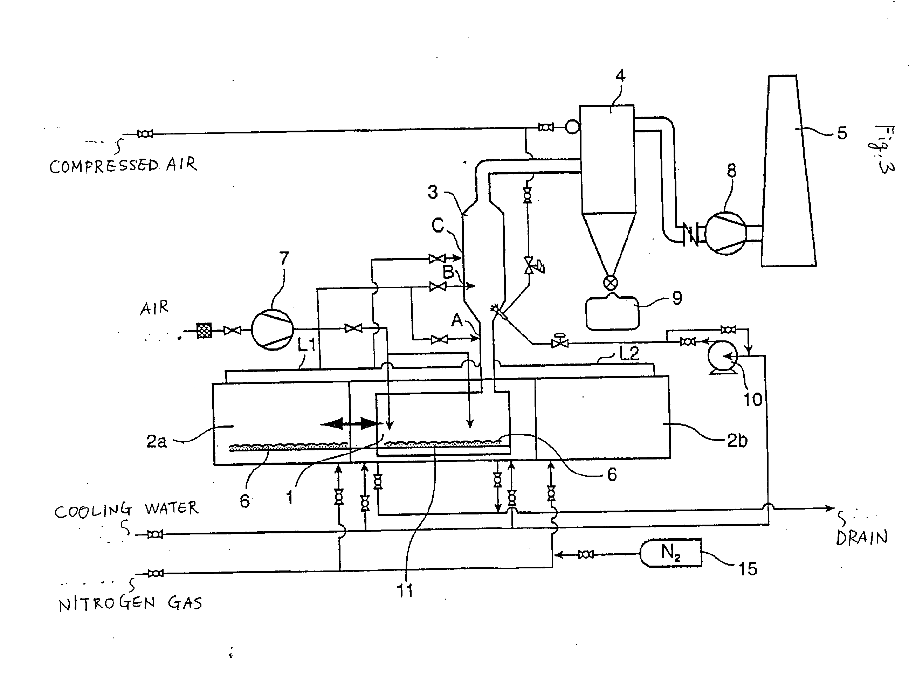

An example will be explained in detail below which represents the constitution of the mobile waste heat treatment furnace for use in the present invention. An equipment containing a heat treatment furnace is so formed that it can be divided into a plurality of movable portions in accordance with a real need, and can be transported using a trailer. When the equipment has been divided into several portions, these portions are allowed to be assembled together in each iron making plant where iron-containing waste is generated, and then connected to various utility supply lines (such as a power supply, a cooling water supply, a compressed air supply, an instrumentation air supply and a nitrogen gas supply), further connected to a fixed dust collector as well as to a chimney. In this way, by treating the iron-containing waste on working site, it is possible to recover some valuable substances contained in the waste, while at the same time rendering the slag harmless. On the other hand, a utility such as a nitrogen gas or the like is allowed to be transported in a bomb (represented by a reference numeral 15 in Fig. 3) corresponding to an amount necessary to be used, and is permitted to be transported together with an equipment main body. Furthermore, a dust collector and a chimney may also be similarly transported together with the heat treatment furnace, by being mounted on the same or different trailers.

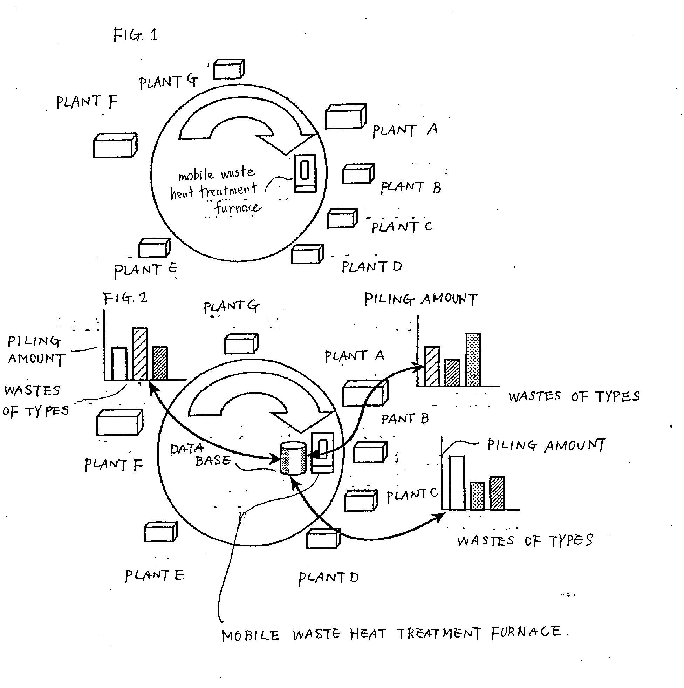

Fig. 1 is an explanatory view schematically showing a concept of the method provided according to the present invention. Actually, according to the method of the present invention, a mobile waste heat treatment furnace is caused to move to various plants A to G which are geographically separated from one another in a manner shown in Fig. 1, thereby heat treating, in respective working sites, the wastes generated in various different locations. On the other hand, if one plant is not located far away from any of other plants (for example, the two plants are located within a short distance not involving a boundary line which will possibly be encountered by a waste when it is moved from one plant to the other), it is possible to establish a treatment station at an appropriate position (middle position) between the two plants, thereby conducting the heat treatment of the wastes in the treatment station.

Using the above-described arrangement, it is permitted to employ the mobile waste heat treatment furnace to transport valuable substance, volume reduced substance and harmless substance, all obtained during the heat treatment, from the places where wastes are generated. At this time, even if a waste contains a specific substance which is not allowed to be transported across a boundary line, valuable substance obtained during the heat treatment is allowed to be transported across the boundary line. Further, even when each plant involves only a small amount of waste to be treated therein, it is still possible to reduce an equipment cost in each plant, thereby making it possible to carry out the waste treatment in an economical way. Moreover, with the use of the mobile waste heat treatment furnace, it is possible to transport valuable substance, volume reduced substance and harmless substance to the places of other users different from the places where the wastes are generated. As a result, not only is it unnecessary to arrange for other transport equipments such as truck, but also it becomes possible to reduce the space of yard or warehouse necessary for storing materials to be heat treated.

Fig. 2 is an explanatory view schematically showing one example of an embodiment of the present invention. Namely, in carrying out the present invention, it is possible to use at least one parameter selected from the group consisting of generation amount, generation frequency, composition (type) and piling amount of the wastes generated in at least two geographically separated places, so as to determine (1) a movement order for the mobile waste heat treatment furnace, (2) an operation condition (for example, raw material mixing ratio, an atmosphere within the furnace, a temperature within the furnace) for the mobile waste heat treatment equipment, thus making it possible to more effectively and economically treat the waste.

In practice, the aforementioned waste may be classified into various different types in view of their different water contents, particle sizes, iron contents, nitrogen contents as well as zinc contents. On the other hand, the aforesaid generation amount means an amount of waste generated within a predetermined time period, or an amount of waste generated within one day or one week. In contrast, a piling amount means a total amount of waste generated in the past. An upper limit of the piling amount differs with the place. Therefore, a piling amount measured at certain time point, as well as a generation amount accumulated between the arrival of the treatment equipment and the start of the treatment will be a maximum treatment amount.

A communication method for use in carrying out the present invention may be any type of communication including two-way communication or one-way communication, provided that the needed data can be transmitted or received by way of radio communication. However, in view of the fact that preparation is usually necessary in the places where wastes are generated, and in view of a necessity of confirming whether or not data has been processed correctly, it is preferable to select two-way communication. In addition, it is also preferable that the mobile waste heat treatment furnace be provided with a data base for storing and analyzing data such as various parameters transmitted from a plurality of places where wastes are generated.

Furthermore, it is preferable that the mobile waste heat treatment furnace be provided with a hearth for mounting the waste to be treated or a melting furnace for melting the waste. Here, the hearth may be either a mobile hearth or a fixed one. The waste may be supplied to the mobile waste heat treatment furnace in either a continuous manner in which the waste is continuously transported by a portable conveyer to a raw material supply section (see Fig. 3 through Fig. 5) located in the vicinity of the heat treatment furnace, or a batch type manner in which the waste is at first put into a plurality of bags or the like and then transported to the same raw material supply section located in the vicinity of the heat treatment furnace. Moreover, as will be explained in the following, if a plurality of raw material supply sections are provided in connection with the heat treatment furnace, and if raw materials are supplied alternatively from these raw material supply sections in batches, it is possible to perform the heat treatment in a substantially continuous manner, thereby ensuring a further improved efficiency for the heat treatment.

The mobile waste heat treatment furnace used in the present invention may be formed into a structure only for carrying out a general heat treatment. However, according to a view point that it is necessary to reduce some metal oxides so as to obtain some natural sources such as metals, it is preferable for the heat treatment to also include a reducing treatment.

The waste to be treated in the present invention includes dusts discharged from iron making plants such as blast furnace and electric furnace and containing iron, iron oxide or lead. In fact, the present invention can also be applied to treat wastes generated in crushing field in which abandoned automobiles and home electric equipments are crushed. Further, valuable substances obtainable in the above dust heat treatment include reduced iron, metal iron free from slag, zinc oxide and the like. Moreover, as moving means for moving the mobile waste heat treatment equipment used in the present invention, it is also possible to use ship or train in addition to the aforementioned automobile such as trailer.

Although the present invention will be described in detail below with reference to an example, such an example is by no means to restrict the scope of the present invention. In fact, some modifications or changes may be made in accordance with the descriptions given early or later in the present specification, without departing from technical scope of the invention.

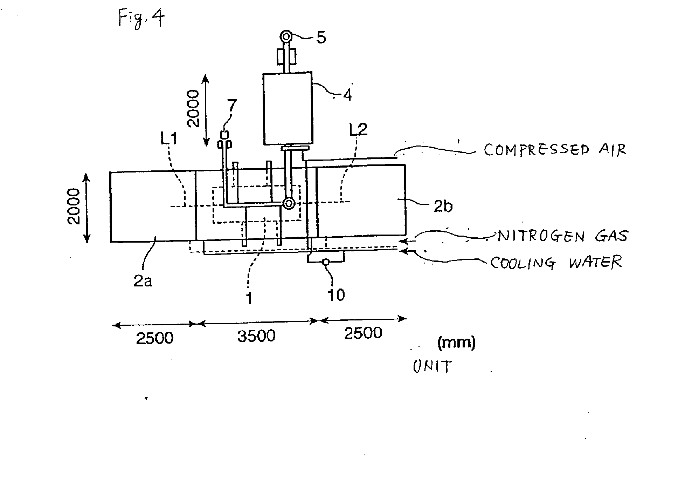

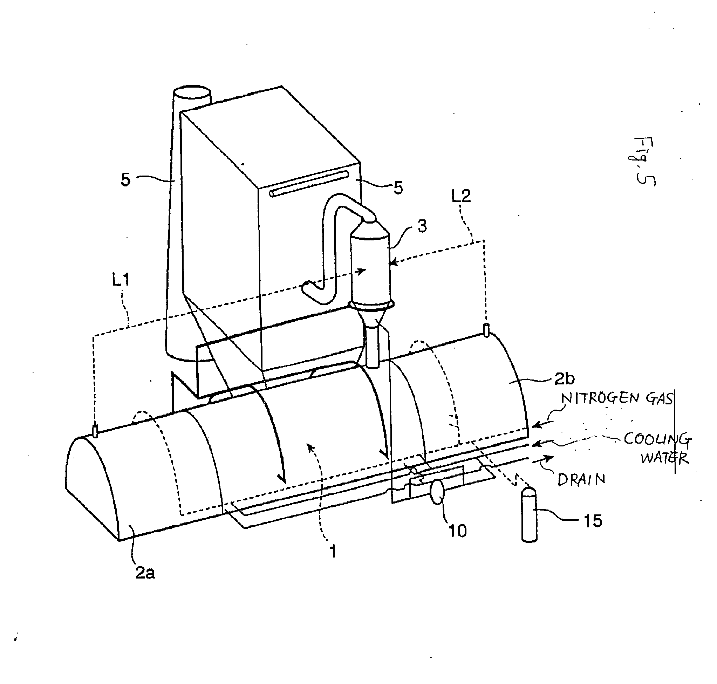

Fig. 3 is an explanatory view schematically showing an example of the mobile heat treatment furnace used in the present invention. Fig. 4 is a plan view of the heat treatment furnace and Fig. 5 is a view showing an external appearance of the furnace. In Fig. 3 through Fig. 5, reference numeral 1 represents a heat treatment furnace, reference numerals 2a and 2b represent a pair of raw material supply section/heat treated material cooling section (hereinafter, simply referred to as "raw material supply section") provided in the vicinity of the heat treatment furnace, reference numeral 3 represents a gas cooler, reference numeral 4 represents a bag filter, reference numeral 5 represents an exhaust chimney, reference numeral 6 represents a waste, reference numeral 7 represents an air blower, reference numeral 8 represents an induced draft fan, reference numeral 9 represents a dust bag, and reference numeral 10 represents a pressurizing pump.

As described earlier in the present specification, the equipment containing a heat treatment furnace has such a structure that it can be divided into a plurality of movable portions in accordance with a real need, and can be transported using a trailer. The plurality of divided portions are allowed to be assembled together in each iron making plant where iron-containing waste is generated, and then connected to various utility supply lines (such as a power supply, a cooling water supply, a compressed air supply, an instrumentation air supply and a nitrogen gas supply), further connected to a fixed dust collector (such as the aforementioned bag filter 4) as well as to a chimney. In this way, by treating the iron-containing waste on working site (or the aforementioned station), it is possible to recover some valuable substances contained in the waste, while at the same time rendering the slag harmless. On the other hand, the aforementioned utility is allowed to be transported in a bomb in view of an amount to be used, and is permitted to be transported together with an equipment main body. Furthermore, a dust collector and a chimney may be transported together with the heat treatment furnace, by being mounted on the same or different trailers.

The heat treatment furnace 1, as well as the pair of raw material supply sections 2a and 2b located in the vicinity of the heat treatment furnace, are all formed into an air tight structure by virtue of tunnel-shaped hood, thus making it possible to prevent an invasion of the surrounding atmospheric air into these apparatus. Here, the connection between the heat treatment furnace 1 and the pair of raw material supply sections 2a, 2b may be accomplished by virtue of flanges and bolts, in a manner such that such connection can be easily released. Further, some expansion joints of a refractory material forming the heat treatment furnace 1 will be buried during a connecting operation using a monolithic refractory material such as refractory ceramic fiber. The heat treatment furnace is protected by being covered with an iron cladding with water flowing therebetween.

A hearth 11 within the heat treatment furnace 1 also serves as a hearth in each of the raw material supply sections 2a and 2b, and is horizontally movable between the heat treatment furnace 1 and the raw material supply sections 2a, 2b. In this way, after a raw material (waste) has been supplied to the hearth 11 located in any one of the raw material supply sections (for example, the raw material supply section 2a), an area on the hearth 11 will be horizontally moved within the heat treatment furnace so that the waste being mounted on this area of the hearth 11 will be heat treated. After that, the heat treated waste located in the heat treatment furnace 1 will be moved to the other raw material supply section 2b. At this time, it is preferable to use a pair of raw material supply sections 2a, 2b. It is also possible that the heat treatment furnace has only single one raw material supply section located on one side thereof.

In the vicinity of the raw material supply section 2b (and the raw material supply section 2a), cooling water is supplied while at the same time a nitrogen gas is supplied into the raw material supply sections, in order to cool the heat treated wastes, thereby ensuring a sufficiently good treatment. The heat treated waste, after having been cooled, may be recovered through any position (not shown) of the equipment, either by using a discharge means such as a scraper, or by making the hearth inclined. In fact, such an operation may be performed alternatively in the raw material supply sections 2a and 2b. In Figs. 3 and 5, reference numeral 15 represents a nitrogen bomb. As compared with a cooling water and a compressed air, a nitrogen gas is a utility not easy to obtain, so that it is still not used by some users. Further, since a nitrogen gas is not used in an amount as large as other cooling medium, only a nitrogen gas bomb is needed to be provided for an auxiliary or emergency use.

In this way, if the raw material supply sections 2a and 2b are provided in connection with the heat treatment furnace 1, and if raw materials are supplied alternatively from these raw material supply sections 2a and 2b in batches, it is possible to perform the heat treatment in a substantially continuous manner, thereby ensuring a further improved efficiency for the desired heat treatment.

On the other hand, although the waste 6 mounted on the hearth 11 is heat treated by rendering the interior of the heat treatment furnace 1 within a temperature range of 1000 to 1500°C, it is preferable to adjust the internal atmosphere of the heat treatment furnace 11 to a reductive atmosphere so as to reduce metal oxides contained in the waste and to reduce and vaporize some metals each having a low melting point, such as zinc and lead. In order to effect the reduction of the metal oxides contained in the waste, as well as to effect the reduction and vaporization of some metal components each having a low melting point, such as zinc and lead, it is preferable to introduce carbonaceous reducing agent into the waste. At this time, during a stage of heating the waste, although carbonaceous reducing agent will generate some volatile components, if a secondary combustion air as well as an air rich in oxygen (or oxygen itself) are introduced by an air blower 7 into the heat treatment furnace 1, especially to an area in the vicinity of the waste, and subjected to a secondary combustion, it is possible to more effectively make use of the heat generated during the process.

A high temperature exhaust gas containing some low boiling point metals such as zinc and lead is discharged from the heat treatment furnace 1. Such an exhaust gas is sent to the cooler 3 by way of a gas duct, so as to be cooled (subjected to a temperature adjustment) by virtue of a water spray formed by mixing a cooling water (which has been pressurized by a pressurizing pump 10) with a compressed air. Subsequently, in the bag filter 4 (dust collector), some metal oxides such as zinc oxide and lead oxide are separated and thus recovered (dust bag 9). On the other hand, an exhaust gas discharged from the bag filter 4 is continuously subjected to a pressure adjustment by an induced draft fan 8 so as to be finally discharged from the chimney 5.

The exhaust gas duct and the heat treatment furnace 1 are connected with each other by means of flange, in a manner such that they can also be easily separated from each other. Further, the water spray does not have to be two-fluid spray (water + compressed air) like that described above. In fact, such a water spray may also be a one-fluid spray (for example, merely water). Alternatively, it is also possible not to use water, but to use one of other refrigerants so as to obtain the same cooling effect.

Some components including cadmium, arsenic, mercury, sodium, potassium, chlorine and fluorine contained within the waste, are volatile so that they will be taken into the exhaust gas and thus be removed from the heat treated material. Further, it is also possible to decompose dioxin.

The above cooler 3 is provided such that it receives in the vicinity of its lower inlet (shown by reference numeral A in Fig. 3) an air flow supplied from the air blower 7. In this way, if there is a gas flow which is an inflammable gas (such as CO, H₂ and a hydrocarbon) not sufficiently burned and discharged from the heat treatment furnace, such a gas flow will be burned as a later combustion treatment. If the inflammable gas which should have been completely burned within the heat treatment furnace is discharged into the surrounding atmosphere, the surrounding atmosphere will be polluted. In view of this, if an air is introduced into a high temperature naturally inflammable area containing such an inflammable gas, the inflammable gas can be burned to its complete extent so that it becomes harmless. Further, the cooler 3 also receives in the vicinity of the water spray (represented by reference numeral B in Fig. 3) another air flow supplied from the air blower 7, thereby diluting an exhaust air within the cooler 3. This is because if the exhaust gas is cooled merely by water, the water content of the exhaust gas will be undesirably increased, hence bringing about an unfavorable influence to the bag filter 4. For this reason, the present invention requires diluting the exhaust gas with an air flow, thereby lowering the temperature of the exhaust gas. Moreover, since the air flow is formed along the wall surface of the cooler 3, it is also possible to obtain an effect of preventing the dust from attaching to the wall surface.

Although the nitrogen gas for use in cooling is supplied to the raw material supply sections 2a and 2b, such nitrogen gas should not be discharged into the surrounding atmosphere without being treated. Therefore, in the present embodiment the nitrogen gas is at first introduced into the cooler 3 by way of pipe lines L1 and L2, and then into the bag filter 4 before being discharged to the surrounding atmosphere (represented by reference numeral C in Fig. 3).

In carrying out the present invention, if the waste which has been subjected to heating and reducing treatment is further heated on the hearth 11 within the heat treatment furnace 1, it is possible to melt and aggregate slags containing iron and gangue components, so as to separate them by virtue of specific gravity difference, thereby producing metal iron particles. The metal iron particles produced in this manner have a high purity close to 100%. At this time, since the slags contain almost no iron component, it is possible to increase the value of thus obtained products. Further, since the slags have been subjected to a high temperature melting treatment, they are in a completely harmless state, thereby permitting them to be treated safely in later steps and to be buried properly. Moreover, in the case where the waste contains only a small amount of iron and the aggregation efficiency is low, if iron ore in each plant and dust containing a high iron content are incorporated, it is possible to improve the aggregation efficiency.

Hereinafter, embodiments of methods of determining a movement order according to the parameters about generated wastes are described.

(Example 1) determining a movement order using data of generation amounts and piling amounts of wastes at each three plant

When data as shown in Table 1 are given, a movement order is obtained in the following way. The values of (piling amount)/(generation amount) are calculated for each plant. The wastes from the plant having the highest value are first treated. In the example of Table 1, since plant B has the highest value of (piling amount)/(generation amount) among the three plants, the mobile furnace is moved to plant B and wastes from plant B are treated. After finishing the treatment at plant B, the values for each plant are recalculated. The wastes from the plant having the highest value at that time are next treated.

**Table 1**

| plant | A | B | C |
|---|---|---|---|
| generation amount of wastes(t) | 5 | 0.5 | 1 |
| piling amount of wastes (t) | 20 | 8 | 5 |
| (piling amount of wastes)/ (generation amount of wastes) | 4 | 16 | 5 |

(Example 2) determining an operation using data of piling amounts and kinds of wastes at each three plant

When data as shown in Table 2 are given, a movement order is obtained in the following way. First, 6 tons of plastic wastes are treated at plant D, so as to obtain carbides as valuable substances. Then, 3 tons of iron dust is reduced at plant E using the carbide obtained at plant D, so as to obtain reduced iron as valuable substances. Next, 4 tons of plastic wastes are treated at plant D, so as to obtain carbides as valuable substances. Then, 2 tons of iron dust is reduced at plant F using the carbide obtained at plant D, so as to obtain reduced iron as valuable substances.

**Table 2**

| | D | E | F |
|---|---|---|---|
| piling amount of wastes (t) | 10 | 3 | 2 |
| kind of wastes | plastics | iron dust | iron dust |

## Claims

1. A mobile waste treatment method for wastes containing metal or metal oxide comprising:
providing a mobile heat treatment furnace for wastes
containing metal or metal oxide;
moving said mobile heat treatment furnace to a first place; conducting a heat treatment at said first place, wherein harmful substances contained in said wastes are removed from said wastes and harmless wastes are obtained; and
moving said mobile heat treatment furnace to a second place after finishing said heat treatment at said first place, for conducting said heat treatment at said second place.

2. The heat treatment method according to claim 1, wherein at least one of a dust collector and a chimney is moved together with said mobile heat treatment furnace.

3. The heat treatment method according to claim 1, wherein at least one of a dust collector and a chimney is fixed in advance in each place where said heat treatment is conducted.

4. The heat treatment method according to anyone of claims 1 to 3, wherein valuable substance, volume reduced substance and harmless substance, all obtained during said heat treatment, are transported out of each place where said heat treatment is conducted.

5. The heat treatment method according to anyone of claims 1 to 4, wherein using at least one parameter selected from the group consisting of generation amount, generation frequency and composition of the wastes generated in at least two places, so as to determine a movement order for said mobile heat treatment furnace.

6. The heat treatment method according to anyone of claims 1 to 5, wherein using at least one parameter selected from the group consisting of generation amount, generation frequency and composition of the wastes generated in at least two places, so as to determine an operation condition for said mobile heat treatment furnace.

7. The heat treatment method according to anyone of claims 1 to 6, wherein said mobile heat treatment furnace has means for performing a communication of data about generated wastes between waste generating places and said mobile heat treatment furnace.

8. The heat treatment method according to anyone of claims 1 to 7, wherein said wastes containing metal or metal oxide contain iron or iron oxide.

9. The heat treatment method according to anyone of claims 1 to 8, wherein said wastes containing metal or metal oxide include zinc.

10. The heat treatment method according to anyone of claims 1 to 9, wherein said heat treatment includes a reduction treatment for reducing metal oxide.

11. The heat treatment method according to anyone of claims 1 to 10, wherein said harmful substances include volatile metal and are recovered in the form of their oxides.
